# EUROPEAN PATENT APPLICATION

(11) **EP 4 764 894 A1**
(43) Date of publication of application: **24.06.2026**
(21) Application number: 24223094.4
(22) Date of filing: 23.12.2024
(51) Int. Cl.: G06F 16/438, G06F 16/638

(54) **PERSONALIZED MUSIC ALBUM CREATION**

(71) Applicant: Bang & Olufsen A/S, 7600 Struer (DK)
(72) Inventor: Elwood-Leach, Louis George, 7600 Struer (DK)
(74) Representative: D Young & Co LLP

(57) **Abstract**

The disclosure provides an approach for generating a personalized audio album. A method includes receiving one or more input images, from a user, at a large language model; determining, by the large language model, whether the one or more images directly or indirectly reference one or more musical artists, one or more musical albums, or one or more musical songs; and in response to determining that at least one of the one or more images does not directly or indirectly reference one or more musical artists, one or more musical albums, or one or more musical songs: identifying one or more features of the at least one image; generating, based on the one or more features, an audio playlist and at least one of: an album title or an album cover art image; and displaying the audio playlist and the album title and/or the album cover art image.

## Description

### FIELD

The present disclosure is related to multimedia content generation and, more specifically, to systems and methods for creating personalized audio playlists and albums.

### BACKGROUND

Multimedia refer to the integration and presentation of multiple forms of media content, which may combine text, audio, images, videos, animations, and interactive elements. Multimedia can integrate these media forms into cohesive experiences seamlessly. Many multimedia applications enable users to interact with content, such as navigating menus, playing games, etc. Advancements in multimedia technology have significantly enhanced the ability to provide personalized and immersive user experiences.

One important form of media is music. Traditionally, users have curated personalized collections of music for enjoyment and as a form of self-expression. For example, throughout the sixties and seventies, one might have curated a collection of records including albums by the person's favorite artists. Similarly, in the eighties one might have curated a collection of cassettes tapes and in the nineties a collection of compact discs (CDs). In addition, users may have created "mix-tapes", such as cassette tape or CD with a collection of songs, curated by the user and recorded on the cassette or CD. With the advent of mp3 in the late nineties and early twenty-first century, users began transitioning to digital music collections. Initially, users typically still purchased individual mp3s, or even full mp3 digital albums (e.g., from a service such iTunes by Apple, Inc., in Cupertino, California).

Today, however, music streaming is becoming ubiquitous and music consumption has increasingly shifted to a subscription-based model, in which users may pay a monthly subscription fee for unlimited access to millions of tracks. For example, such subscription-based music streaming services include Apple Music, Spotify, Tidal, Pandora, and others. With such services, the quantity of music consumed is limited only by the time available to consume, no longer by what the user can afford to purchase or by the space to house it.

These shifts have changed the ways that users interact with music. Rather than individually selecting and curating music collections, users instead have unlimited access to music. Further, increasingly, rather than a user manually creating a playlist or music library, music is being curated for the user-rather than by the user. While the content availability and content curation offered by these services can improve the usability of these services, all of these changes lead to a diminished sense of ownership of the music, less personalization of the user's musical library, and less of a connection to the music with the user.

Thus, as the availability of music is increasingly unlimited, there is a greater need and desire for approaches to personalize music for the user, to provide a sense of connection, ownership, and personalization.

### SUMMARY

Particular aspects are set out in the appended independent claims. Various optional embodiments are set out in the dependent claims.

A method of generating a personalized audio album is provided. The method includes receiving one or more input images, from a user, at a large language model. The method includes determining, by the large language model, whether the one or more images directly or indirectly reference one or more musical artists, one or more musical albums, or one or more musical songs. The method includes in response to determining that at least one of the one or more images does not directly or indirectly reference one or more musical artists, one or more musical albums, or one or more musical songs: identifying, by the large language model, one or more features of the at least one image; generating, by the large language model based on the one or more features, an audio playlist and at least one of: an album title or an album cover art image; and displaying the audio playlist and the at least one of the album title or the album cover art image to the user.

A computer readable medium comprising (e.g. storing and/or conveying) computer executable code for generating a personalized audio album is provided. The computer executable code includes code for receiving one or more input images, from a user, at a large language model. The computer executable code includes code for determining, by the large language model, whether the one or more images directly or indirectly reference one or more musical artists, one or more musical albums, or one or more musical songs. The computer executable code includes code for, in response to determining that at least one of the one or more images does not directly or indirectly reference one or more musical artists, one or more musical albums, or one or more musical songs: identifying, by the large language model, one or more features of the at least one image; generating, by the large language model based on the one or more features, an audio playlist and at least one of: an album title or an album cover art image; and displaying the audio playlist and the at least one of the album title or the album cover art image to the user.

An apparatus is provided. The apparatus includes means for receiving one or more input images, from a user, at a large language model. The apparatus includes means for determining, by the large language model, whether the one or more images directly or indirectly reference one or more musical artists, one or more musical albums, or one or more musical songs. The apparatus includes means for, in response to determining that at least one of the one or more images does not directly or indirectly reference one or more musical artists, one or more musical albums, or one or more musical songs: identifying, by the large language model, one or more features of the at least one image; generating, by the large language model based on the one or more features, an audio playlist and at least one of: an album title or an album cover art image; and displaying the audio playlist and the at least one of the album title or the album cover art image to the user.

Other aspects provide: an apparatus operable, configured, or otherwise adapted to perform any one or more of the aforementioned methods and/or those described elsewhere herein; a computer-readable media comprising instructions that, when executed by a processor of an apparatus, cause the apparatus to perform the aforementioned methods as well as those described elsewhere herein; a computer program product embodied on a computer-readable storage medium comprising code for performing the aforementioned methods as well as those described elsewhere herein; and/or an apparatus comprising means for performing the aforementioned methods as well as those described elsewhere herein. By way of example, an apparatus may comprise a processing system, a device with a processing system, or processing systems cooperating over one or more networks.

The following description and the appended figures set forth certain features for purposes of illustration.

### BRIEF DESCRIPTION OF THE DRAWINGS

The appended figures depict certain features of the various aspects described herein and are not to be considered limiting of the scope of this disclosure.
**Figure 1** depicts an example workflow for generating a personalized album for a user.
**Figure 2** depicts an example smartphone with a plurality of selectable icons displayed on a user interface.
**Figure 3** depicts the example smartphone with a personalized album generation application launch screen displayed on the user interface.
**Figure 4** depicts an example image provided to the personalized album generation application displayed on the user interface.
**Figure 5** depicts an example textual image type analysis information output to the personalized album generation application displayed on the user interface.
**Figure 6** depicts an example playlist output to the personalized album generation application displayed on the user interface.
**Figure 7** depicts an example album cover output to the personalized album generation application displayed on the user interface.
**Figure 8** depicts an example album title output to the personalized album generation application displayed on the user interface.
**Figure 9** depicts an example of the textual image type analysis information, playlist, album cover, and album title output to the personalized album generation application displayed on the user interface.
**Figure 10** depicts an example flow diagram for generating a personalized album for a user, according to one or more aspects.

### DETAILED DESCRIPTION

The present disclosure provides an approach for generating an album for a user that is personalized and customized for that user.

As discussed above, with the increasingly ubiquitous availability of unlimited music, there is a growing demand for personalized and customized music content curation for users and for novel ways for users to discover and interact with media content.

Recent developments in artificial intelligence (AI) and machine learning (ML) have enabled automated systems to understand and interpret multimedia content. Some systems use AI/ML to generate new music, fetch music, or to create a playlist of music. However, existing solutions for playlist generation are largely confined to textual or auditory data as input.

There is a growing demand for systems capable of integrating audio and visual mediums to offer seamless multimedia experiences. For instance, users might want playlists that complement a photo slideshow, match the aesthetic of a travel album, or enhance the atmosphere of a video presentation. Addressing this demand requires a novel approach to playlist generation, leveraging machine learning to interpret visual inputs and align them with suitable audio tracks.

Aspects of the present disclosure provide techniques for generating a personalized music album (e.g.., a digital music album) for a user based on image input provided by the user. Use of images to generate albums for the user may evoke a sense of discovery or magic, increasing the sense of connection of the user with the music. Additionally, using images to generate albums allows the user to connect listening experiences to physical spaces, or physical objects, to create experiences evocative of tangible media.

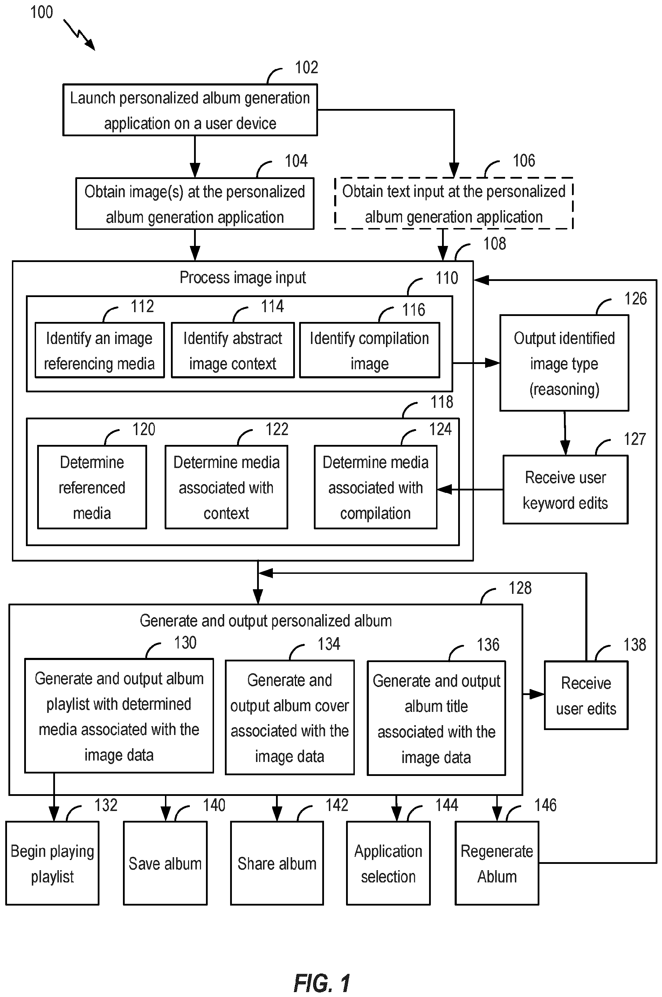

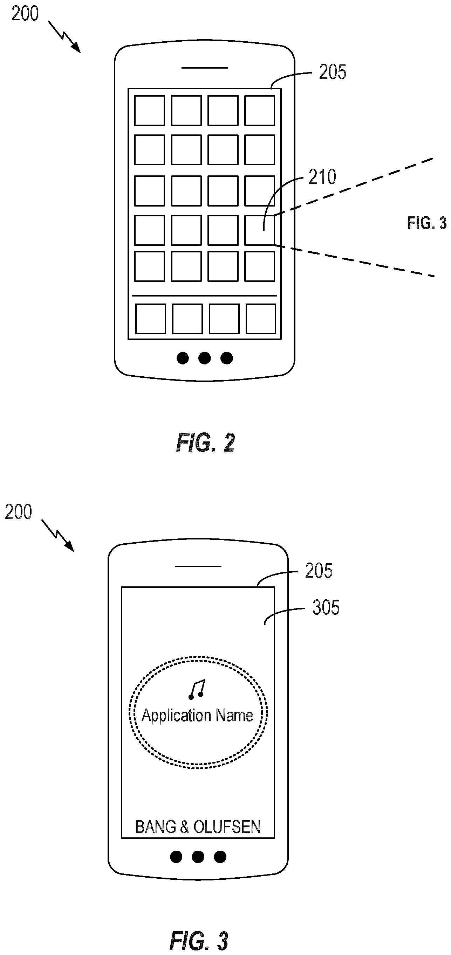

**Figure 1** depicts an example workflow 100 for generating a personalized album for a user, according to one or more aspects. As shown in **Figure 1****,** the workflow 100 may begin, at operation 102, with launching a personalized album generation application ("app") on a user device. Alternatively, a website may be launched (e.g., via an Internet browser). The user device may be a smartphone, tablet, laptop computer, desktop computer, wearable device, smart TV, virtual personal assistant device, or other smart device. **Figure 2** depicts an example smartphone 200 with a plurality of selectable icons displayed on a user interface 205 (e.g., an interactive touchscreen display). Each icon may correspond to an application. A particular icon 210 may correspond to the personalized album generation application. Selection of the icon 210 may open the personalized album generation application with may initiate with an application launch screen 305 as shown in an example in **Figure 3****.**

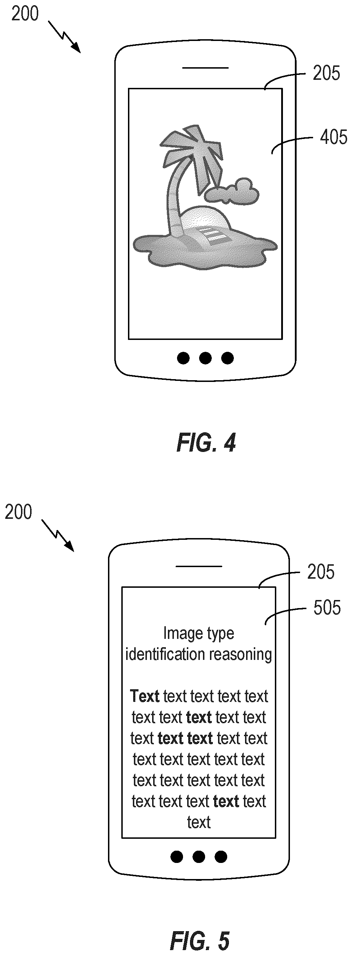

Returning to the workflow 100 illustrated in **Figure 1****,** at operation 104, the personalized album generation application obtains one or more images. In some aspects, the user may provide one or more images to the personalized album generation application. In some aspects, the user may select to capture a new image or may select to upload an existing image (e.g., from the smartphone 200, a cloud, or other location). **Figure 4** depicts an example image 405 provided by the user to the personalized album generation application displayed on the user interface 205. In some aspects, the one or more images are image data. In some aspects, the one or more images include a video. In some aspects, the user may input multiple images by choosing a file folder or sort/filter multiple images after geography, date, image content or other methods.

According to the present disclosure, the user may input any image to the personalized album generation application. For example, images obtained by the personalized album generation application may include, but not are limited to, a selfie, art work, a picture of food on a table, an image of a group of friends pretending to be a boy band, a picture taken of a landscape or nature, an abstract image, or any other picture.

Returning to the workflow 100 illustrated in **Figure 1****,** at operation 108, the personalized album generation application uses machine learning to process the input image(s). In some aspects, the personalized album generation application uses a large language learning model (LLM) to analyze the image input. In some aspects, the personalized album generation application uses an application programming interface (API) to an existing machine learning model (e.g., to an LLM provided by OpenAI). In some aspects, the personalized album generation application further obtains text input, at operation 106, and uses machine learning for both image recognition and text processing.

In some aspects, the processing of the input images by the personalized album generation application, at operation 108, includes identifying a type of the image or images at operation 110 and determining associated media based on the identified type of the image or images at operation 118.

In some aspects, identifying a type of the image or images at operation 110 may include the personalized album generation application identifying an image directly referencing media at operation 112. For example, an image directly referencing media may include an image of a CD, album cover, poster, band t-shirt, or the like, that directly references a particular song, musician or music group, or album. In some aspects, determining associated media based on the identified type of the image or images at operation 118 includes determining the directly referenced media at operation 120.

In some aspects, identifying a type of the image or images at operation 110 may include the personalized album generation application identifying an image indirectly referencing media at operation 112. For example, an image of a smashed pumpkin may be an indirect reference to the musical group "The Smashing Pumpkins", in contrast to a direct reference such as an image of an album cover, a band t-shirt, or poster of The Smashing Pumpkins. In some aspects, determining associated media based on the identified type of the image or images at operation 118 includes determining the indirectly referenced media at operation 120.

In some aspects, identifying a type of the image or images at operation 110 may include the personalized album generation application identifying an abstract image at operation 114. For example, an abstract image may be an image that does not directly or indirectly reference any media, but that may evoke a context. In an illustrative example, the one or more abstract images may include a selfie, a picture of artwork on a wall, or a picture of a group of friends pretending to be a boyband. From the abstract image(s), the ML/AI model may be trained to identify or determine the context, such as one or more emotions, moods, environment, or other contexts, evoked by the image(s), such as, for example, "serene", "energetic", "nostalgic", "urban", etc. In some aspects, the ML/AI model may be trained to identify dominant colors and contrasts, for example, indicating themes such as "warm" or "cold." In some aspects, the ML/Al model may be trained to identify landscapes (e.g., mountains, forests, beaches, etc.), objects (e.g., cars, people, etc.), activities (e.g., sports, celebrations, etc.), locations (e.g., country or city), a time (e.g., present or past), and/or facial expressions, present in the one or more abstract images, which may further indicate a theme, mood, vibe, emotion, or the like, which may be used to match the image context to media evoking the same or related context.

In some aspects, determining associated media based on the identified type of the image or images at operation 118 includes, at operation 122, determining media associated with the evoked context. For example, the personalized album generation application may be trained to process the abstract image data to determine the context evoked and match to media, such as the particular media or a genre of media associated with, or related to, the evoked context.

In some aspects, identifying a type of the image or images at operation 110 may include the personalized album generation application identifying a compilation image at operation 116. For example, a compilation image may include an image, or set of images, with multiple direct references, multiple abstract references, and/or a mix of direct and abstract references. In some aspects, determining associated media based on the identified type of the image or images at operation 118 includes, at operation 124, determining media associated with the image compilation.

In some aspects, the ML or AI model used by the personalized album generation application may be a pre-trained or custom-built neural network that maps extracted features from the image data to corresponding contextual categories. In some aspects, the ML or AI model may be a convolution neural network (CNN), an LLM, a reinforcement learning model, or other type ML or AI model.

Returning to the workflow 100 illustrated in **Figure 1****,** at operation 126, the personalized album generation application may output information associated with the identification of the image type. For example, the personalized album generation application may display text indicating a description of the image and analysis of the identified types. In some aspects, keywords in the text may be indicated, such as via highlighting, bolding, increased font size, or other emphasis. The keywords may be associated with pre-trained features mapped to contexts and/or media types. In some aspects, the keywords depicts words used to prompt the LLM to generate the personalized album (e.g., the playlist 605, album cover 705, and album title 805, discussed in detail herein below). **Figure** 5 depicts an example textual image type analysis information 505 output to the personalized album generation application displayed on the user interface 205 with bold emphasis indicating keywords. In some aspects, in addition to displaying keyword text, the personalized album generation application may label associated portions of the input image with the keywords.

In some aspects, the keywords used by the personalized album generation application may edited by the user. As shown in the workflow 100 illustrated in **Figure 1****,** at operation 127, the personalized album generation application may receive keyword edits from the user. As shown, the keyword edits may be used by the personalized album generation application to determine the associated media based on the identified type of the image or images at operation 118.

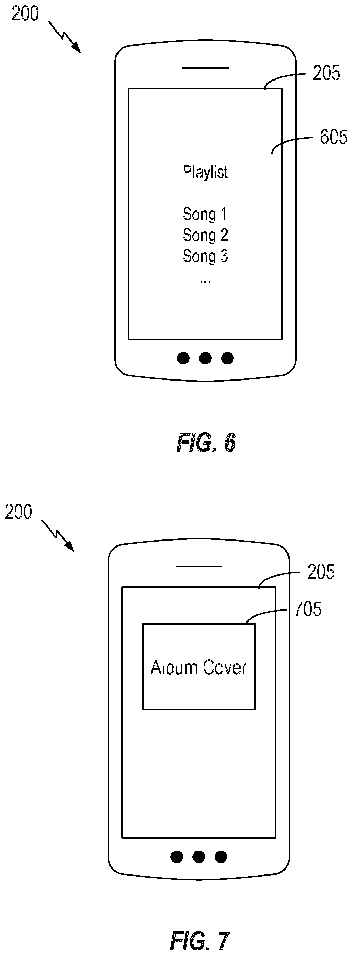

Returning to the workflow 100 illustrated in **Figure 1****,** at operation 128, the personalized album generation application includes generating and outputting a personalized album. Generating the personalized album at operation 128 includes, at operation 130, generating and outputting an album playlist containing the media identified at operation 118. In some aspects, generating the playlist may include selecting existing musical tracks, generating new music, selecting or generating ambient sounds and/or noises, and/or selecting or generating other types of audio content. **Figure 6** depicts an example playlist 605 output to the personalized album generation application displayed on the user interface 205.

According to certain aspects, the workflow 100 illustrated in **Figure 1** may include, at operation 132, beginning playing the generated personalized playlist. For example, the generated personalized playlist may automatically begin playing on the user's device.

Generating the personalized album at operation 128 includes, at operation 134, generating and outputting an album cover associated with the image data. In some aspects, the generating and outputting an album cover, at operation 134, is using the provided image, or images, as the album cover. In some aspects, the generating and outputting an album cover, at operation 134, uses ML/AI to render a version of the provided image or images. In some aspects, the generating and outputting an album cover, at operation 134, uses ML/Al to generate the album cover art image based on the image type or types identified at operation 110. In some aspects, the generating and outputting the album cover includes generating an album cover image with text overlay. The ML/Al model may further select a font, font size, location, and color for text overlay. **Figure 7** depicts an example album cover 705 output to the personalized album generation application displayed on the user interface 205.

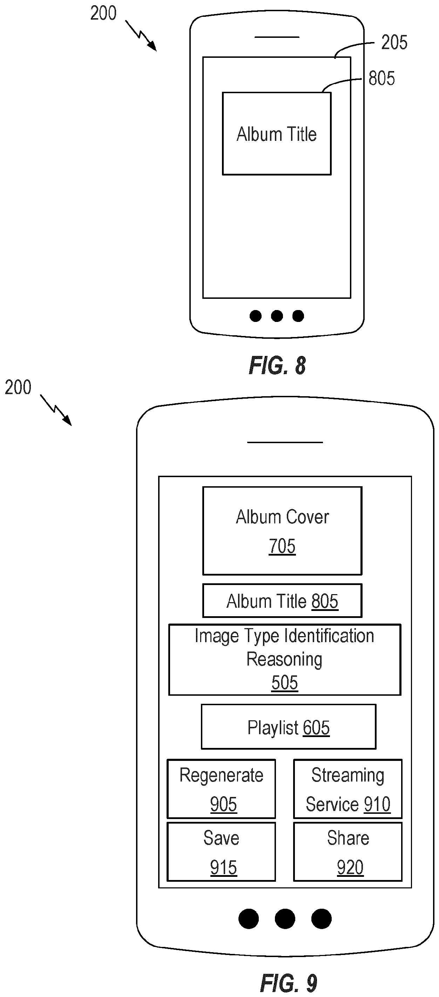

Generating the personalized album at operation 128 includes, at operation 136, generating and outputting an album title associated with the image data. In some aspects, the generating and outputting the album title, at operation 136, uses ML/AI to generate the album title based on the image type or types identified at operation 110. **Figure 8** depicts an example album title 805 output to the personalized album generation application displayed on the user interface 205.

**Figure 9** depicts an example of the textual image type analysis information 505, playlist 605, album cover 705, and album title 805 output to the personalized album generation application displayed on the user interface 205.

According to certain aspects, the user may be able to edit the personalized playlist. For example, the user may be able to edit or regenerate the playlist, album title, and album cover. Returning to the workflow 100 illustrated in **Figure 1****,** at operation 138, the personalized album generation application may receive edits from the user. Based on the user edits, the personalized album generation application may return to operation 128 to regenerate the personalized album and display the regenerated personalized album.

As shown, the workflow 100 may include, at operation 146, receiving an instruction to regenerate the album, the playlist, the album cover, and/or the album title. Based on the instruction, the workflow 100 returns to the operation 108 to process the image input or may return directly to the operation 128 to regenerate the personalized album and display the regenerated personalized album. As shown in **Figure 9****,** the personalized album generation application displayed on the user interface 205 may include a selectable digital button to regenerate 905 the personalized album (the playlist, the album title, and/or the album cover).

According to certain aspects, the user may select a streaming platform (application), such as Spotify, Apple Music, Tidal, or another streaming service, to link to the generated personalized album. As shown, the workflow 100 may include, at operation 144, receiving a selection of a streaming platform to link with the personalized album. In response to the selection, the personalized album generation application may associate with the selected streaming platform via an API and the generated personalized album may then appear in the selected streaming platform associated with user's account. As shown in **Figure 9****,** the personalized album generation application displayed on the user interface 205 may include a selectable digital button to select the streaming service 910 to link to the personalized album.

According to certain aspects, the user may save the generated personalized album. As shown, the workflow 100 may include, at operation 140, receiving an instruction to save the generated personalized album. In response to the selection, the personalized album generation application may save the generated personalized album. As shown in **Figure 9****,** the personalized album generation application displayed on the user interface 205 may include a selectable digital button to save the personalized album 915. In some aspects, the generated personalized album may be stored and indicated in a memories, files, or albums interface or screen of the personalized album generation application.

According to certain aspects, the user may share the generated personalized album. As shown, the workflow 100 may include, at operation 142, receiving an instruction to share the generated personalized album. In some aspects, the instruction may indicate where to share the album and/or what to share. In some aspects, sharing the album may include sharing a link to the album, sharing a link to the personalized album on a selected streaming platform, and/or for generating and sharing a video depicting the creation of the personalized album (e.g., a video depicting the generation at various stages of the workflow 100). In some aspects, the instruction may indicate a social media platform, email addresses, or phone numbers or any other contact form for sharing the generated personalized album. In response to the selection, the personalized album generation application may share the generated personalized album. As shown in **Figure 9****,** the personalized album generation application displayed on the user interface 205 may include a selectable digital button to share the personalized album 920.

The personalized album generation application provides the user an experience of creating a unique and customized album that is personalized to the user. The personalized album generation application provides the user a seamless multimedia experience, integrating visual and audio content, while eliminating the need for manual playlist curation thereby saving time and effort for the user. The personalized and contextually relevant album enhances the emotional engagement of the user with the album. For example, the personalized album generation application could be used to create mood-specific soundtracks for slideshows or video presentations, to automatically generate music for photo albums or stories shared on social media, to enhance movie trailers, advertisements, virtual reality (VR) or augmented reality (AR) experiences with tailored audio, and/or to set an ambience at a particular environment, venue, business, home, or event based on visual themes.

### Example Method for Personalized Album Generation

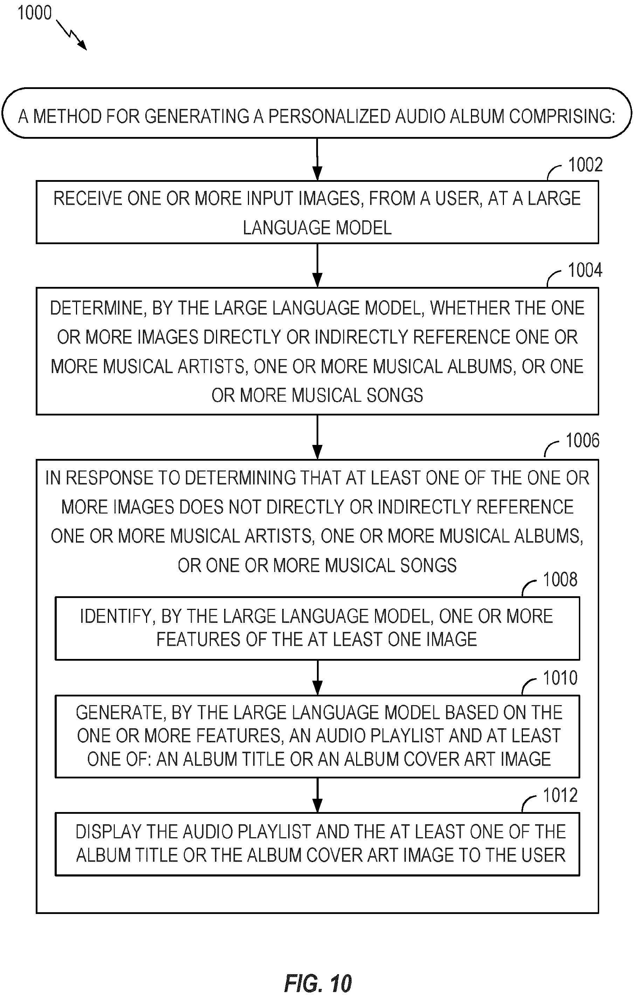

**Figure 10** is a flow diagram illustrating operations 1000 for generating a personalized audio album, according to one or more aspects. The operations 1000 may be understood with reference to the **Figures 1-9****.**

Operations 1000 may begin, at operation 1002, with receiving one or more input images, from a user, at a large language model. In some aspects, receiving the one or more input images, from the user, at the large language model at operation 1002 includes prompting the user to: upload one or more existing images from a user device and/or to take one or more new images using a camera of the user device.

Operations 1000 may proceed, at operation 1004, with determining, by the large language model, whether the one or more images directly or indirectly reference one or more musical artists, one or more musical albums, or one or more musical songs.

Operations 1000 may proceed, at operation 1006, with determining at least one of the one or more images does not directly or indirectly reference one or more musical artists, one or more musical albums, or one or more musical songs.

In response to determining that at least one of the one or more images does not directly or indirectly reference one or more musical artists, one or more musical albums, or one or more musical songs, operations 1000 include operations 1008, 1010, and 1012.

Operation 1008 includes identifying, by the large language model, one or more features of the at least one image. In some aspects, identifying, by the large language model, one or more features of the at least one image at operation 1008, includes identifying at least one of: a facial expression, an environment, a mood, an emotion, a location, a country, a city, a landscape, an object, an activity, or a time associated with the one or more images.

Operation 1010 includes generating, by the large language model, an audio playlist and at least one of: an album title or an album cover art image based on the one or more features. In some aspects, operations 1010 include generating, by the large language model, the audio playlist and both the album title and the album cover art image.

In some aspects, generating, by the large language model, the audio playlist based on the one or more features at operation 1010, includes identifying a set of audio tracks associated with the one or more identified features.

In some aspects, generating, by the large language model, the album cover art image based on the one or more features at operation 1010, includes using at least one of the one or more input images as the album cover art image.

In some aspects, generating, by the large language model, the album cover art image based on the one or more features at operation 1010, includes generating, based on the one or more features, a new image corresponding to at least one of the one or more input images as the album cover art image.

In some aspects, generating, by the large language model, the album cover art image based on the one or more features at operation 1010 includes generating, based on the one or more features, a new image as the album cover art image.

In some aspects, generating, by the large language model, the album cover art image based on the one or more features at operation 1010 includes generating, by the large language model, text associated with the personalized audio album; selecting, by the large language model, a font, a font size, a font color, and a placement location for the text; and overlaying the album cover art image with the text at the selected placement location.

Operation 1012 includes displaying the audio playlist and the at least one of the album title or the album cover art image to the user.

In some aspects, operations 1000 further include in response to determining a second at least one of the one or more images directly or indirectly references one or more musical artists, one or more musical albums, or one or more musical songs, adding to the audio playlist, by the large language model, one more audio tracks corresponding to the referenced one or more musical artists, one or more musical albums, or one or more musical songs.

In some aspects, operations 1000 further include generating text describing the one or more input images and indicating one or more keywords associated with the one or more identified features and displaying the text to the user. The generating, by the large language model, the audio playlist, the album title, and the album cover art image at operation 1010 may be based on the one or more keywords.

In some aspects, operations 1000 further include displaying the one or more input images to the user and overlaying the one or more keywords over associated portions of the one or more input images.

In some aspects, operations 1000 further include receiving input from the user to edit at least one of the one or more keywords. The generating, by the large language model, the audio playlist, the album title, and the album cover art image at operation 1010 may be based on the one or more keywords including the at least one edited keyword. The operations 1000 may further include regenerating, by the large language model, the audio playlist, the album title, and the album cover art image based on the one or more keywords including the at least one edited keyword.

In some aspects, operations 1000 further include in response to generating, by the large language model, the audio playlist, automatically initiating playing of the audio playlist on a user device.

In some aspects, operations 1000 further include receiving input from the user to edit at least one of: the audio playlist, the album title, or the album cover art image and regenerating at least one of: the audio playlist, the album title, or the album cover art image based on the input from the user.

In some aspects, operations 1000 further include receiving an instruction from the user to regenerate at least one of: the audio playlist, the album title, or the album cover art image and regenerating at least one of: the audio playlist, the album title, or the album cover art image based on the instruction from the user.

In some aspects, operations 1000 further include receiving a selection from the user of an audio streaming service and sending, via an application programming interface (API), the personalized audio album to the selected audio streaming service.

In some aspects, operations 1000 further include receiving a selection from the user to share the personalized audio album and providing a link to the personalized audio album to at least one of: the user, one or more phone numbers, one or more email addresses, or one or more social media platforms or other contact information in response to the selection from the user.

In some aspects, operations 1000 further include generating a video depicting creation of the personalized audio album and sharing the video to the at least one of: the user, one or more phone numbers, one or more email addresses, or one or more social media platforms in response to the selection from the user.

### Example Aspects

Therefore, from one perspective, there have been described approaches for generating a personalized audio album. A method includes receiving one or more input images, from a user, at a large language model; determining, by the large language model, whether the one or more images directly or indirectly reference one or more musical artists, one or more musical albums, or one or more musical songs; and in response to determining that at least one of the one or more images does not directly or indirectly reference one or more musical artists, one or more musical albums, or one or more musical songs: identifying one or more features of the at least one image; generating, based on the one or more features, an audio playlist and at least one of: an album title or an album cover art image; and displaying the audio playlist and the album title and/or the album cover art image.

In addition to the various aspects described above, specific combinations of aspects are within the scope of the disclosure, some of which are detailed below:
Aspect 1: A method of generating a personalized audio album, the method comprising: receiving one or more input images, from a user, at a large language model; determining, by the large language model, whether the one or more images directly or indirectly reference one or more musical artists, one or more musical albums, or one or more musical songs; and in response to determining that at least one of the one or more images does not directly or indirectly reference one or more musical artists, one or more musical albums, or one or more musical songs: identifying, by the large language model, one or more features of the at least one image; generating, by the large language model, an audio playlist and at least one of: an album title or an album cover art image based on the one or more features; and displaying the audio playlist and the at least one of the album title or the album cover art image to the user.
Aspect 2: The method of Aspect 1, wherein receiving the one or more input images, from the user, at a large language model comprises prompting the user to: upload one or more existing images from a user device; or take one or more new images using a camera of the user device.
Aspect 3: The method of any combination of Aspects 1-2, further comprising, in response to determining that a second at least one of the one or more images directly or indirectly references one or more musical artists, one or more musical albums, or one or more musical songs, adding to the audio playlist, by the large language model, one more audio tracks corresponding to the referenced one or more musical artists, one or more musical albums, or one or more musical songs.
Aspect 4: The method of any combination of Aspects 1-3, wherein identifying, by the large language model, one or more features of the one or more images comprises identifying at least one of: a facial expression, an environment, a mood, an emotion, a location, a country, a city, a landscape, an object, an activity, or a time associated with the one or more images.
Aspect 5: The method of any combination of Aspects 1-4, wherein generating, by the large language model, the audio playlist based on the one or more features comprises identifying a set of audio tracks associated with the one or more identified features.
Aspect 6: The method of any combination of Aspects 1-5, wherein generating, by the large language model, the album cover art image based on the one or more features comprises using at least one of the one or more input images as the album cover art image.
Aspect 7: The method of any combination of Aspects 1-6, wherein generating, by the large language model, the album cover art image based on the one or more features comprises generating, based on the one or more features, a new image corresponding to at least one of the one or more input images as the album cover art image.
Aspect 8: The method of any combination of Aspects 1-7, wherein generating, by the large language model, the album cover art image based on the one or more features comprises generating, based on the one or more features, a new image as the album cover art image.
Aspect 9: The method of any combination of Aspects 1-8, wherein generating, by the large language model, the album cover art image based on the one or more features comprises: generating, by the large language model, text associated with the personalized audio album; selecting, by the large language model, a font, a font size, a font color, and a placement location for the text; and overlaying the album cover art image with the text at the selected placement location.
Aspect 10: The method of any combination of Aspects 1-9, further comprising: generating text describing the one or more input images and indicating one or more keywords associated with the one or more identified features; and displaying the text to the user, wherein the generating, by the large language model, the audio playlist, the album title, and the album cover art image is based on the one or more keywords.
Aspect 11: The method of Aspect 10, further comprising: displaying the one or more input images to the user; and overlaying the one or more keywords over associated portions of the one or more input images.
Aspect 12: The method of any combination of Aspects 10-11, further comprising receiving input from the user to edit at least one of the one or more keywords, wherein: the generating, by the large language model, the audio playlist, the album title, and the album cover art image is based on the one or more keywords including the at least one edited keyword; or the method further comprises regenerating, by the large language model, the audio playlist, the album title, and the album cover art image based on the one or more keywords including the at least one edited keyword.
Aspect 13: The method of any combination of Aspects 1-12, further comprising, in response to generating, by the large language model, the audio playlist, automatically initiating playing of the audio playlist on a user device.
Aspect 14: The method of any combination of Aspects 1-13, further comprising: receiving input from the user to edit at least one of: the audio playlist, the album title, or the album cover art image; and regenerating at least one of: the audio playlist, the album title, or the album cover art image based on the input from the user.
Aspect 15: The method of any combination of Aspects 1-14, further comprising: receiving an instruction from the user to regenerate at least one of: the audio playlist, the album title, or the album cover art image; and regenerating at least one of: the audio playlist, the album title, or the album cover art image based on the instruction from the user.
Aspect 16: The method of any combination of Aspects 1-15, further comprising: receiving a selection from the user of an audio streaming service; and sending, via an application programming interface (API), the personalized audio album to the selected audio streaming service.
Aspect 17: The method of any combination of Aspects 1-16, further comprising: receiving a selection from the user to share the personalized audio album; and providing a link to the personalized audio album to at least one of: the user, one or more phone numbers, one or more email addresses, or one or more social media platforms in response to the selection from the user.
Aspect 18: The method of Aspect 17, further comprising: generating a video depicting creation of the personalized audio album; and sharing the video to the at least one of: the user, one or more phone numbers, one or more email addresses, or one or more social media platforms in response to the selection from the user.
Aspect 19: An apparatus comprising means for performing a method in accordance with any of Aspects 1-18.
Aspect 20: A computer-readable medium comprising executable instructions that, when executed by one or more processors of an apparatus, cause the apparatus to perform a method in accordance with any of Aspects 1-18.
Aspect 21: A computer program product embodied on a computer-readable storage medium comprising code for performing a method in accordance with any of Aspects 1-18.
Aspect 22: An apparatus comprising: a memory comprising executable instructions and one or more processors configured to execute the executable instructions and cause the apparatus to perform a method in accordance with any of Aspects 1-18.
Aspect 23. A computer readable medium comprising computer executable code for generating a personalized audio album, the computer executable code comprising: code for receiving one or more input images, from a user, at a large language model; code for determining, by the large language model, whether the one or more images directly or indirectly reference one or more musical artists, one or more musical albums, or one or more musical songs; and code for, in response to determining that at least one of the one or more images does not directly or indirectly reference one or more musical artists, one or more musical albums, or one or more musical songs: identifying, by the large language model, one or more features of the at least one image; generating, by the large language model based on the one or more features, an audio playlist and at least one of: an album title or an album cover art image; and displaying the audio playlist and the at least one of the album title or the album cover art image to the user.
Aspect 24. An apparatus comprising: means for receiving one or more input images, from a user, at a large language model; means for determining, by the large language model, whether the one or more images directly or indirectly reference one or more musical artists, one or more musical albums, or one or more musical songs; and means for, in response to determining that at least one of the one or more images does not directly or indirectly reference one or more musical artists, one or more musical albums, or one or more musical songs: identifying, by the large language model, one or more features of the at least one image; generating, by the large language model based on the one or more features, an audio playlist and at least one of: an album title or an album cover art image ; and displaying the audio playlist and the at least one of the album title or the album cover art image to the user.

### Additional Considerations

The preceding description is provided to enable any person skilled in the art to practice the various aspects described herein. The examples discussed herein are not limiting of the scope, applicability, or aspects set forth in the claims. Various modifications to these aspects will be readily apparent to those skilled in the art, and the general principles defined herein may be applied to other aspects. For example, changes may be made in the function and arrangement of elements discussed without departing from the scope of the disclosure. Various examples may omit, substitute, or add various procedures or components as appropriate. For instance, the methods described may be performed in an order different from that described, and various actions may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, a system on a chip (SoC), or any other such configuration.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more actions for achieving the methods. The method actions may be interchanged with one another without departing from the scope of the claims. In other words, unless a specific order of actions is specified, the order and/or use of specific actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. In the case of software, this many include computer and/or processor executable code that when executed causes a computer to carry out any of the various operations of methods described above. Such code may include instructions and may be provided by way of a computer readable medium. A computer-readable medium may be provided by way of a computer-readable storage medium and/or a computer-readable transmission medium. A computer-readable storage medium may be referred to as a non-transitory computer-readable medium. Examples of a computer-readable storage medium may include a CD, a DVD, a storage device, a diskette, a tape, flash memory, physical memory, or any other computer-readable storage medium. A computer-readable transmission medium, by which instructions may be conveyed, may include carrier waves, transmission signals or the like. A computer-readable transmission medium may convey instructions between components of a single computer system and/or between plural separate computer systems.

The following claims are not intended to be limited to the aspects shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for". All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A method of generating a personalized audio album, the method comprising:
receiving one or more input images, from a user, at a large language model;
determining, by the large language model, whether the one or more images directly or indirectly reference one or more musical artists, one or more musical albums, or one or more musical songs; and
in response to determining that at least one of the one or more images does not directly or indirectly reference one or more musical artists, one or more musical albums, or one or more musical songs:
identifying, by the large language model, one or more features of the at least one image;
generating, by the large language model based on the one or more features, an audio playlist and at least one of: an album title or an album cover art image; and
displaying the audio playlist and the at least one of the album title or the album cover art image to the user.

2. The method of claim 1, wherein receiving the one or more input images, from the user, at a large language model comprises prompting the user to:
upload one or more existing images from a user device; or
take one or more new images using a camera of the user device.

3. The method of any combination of claims 1-2, further comprising, in response to determining that a second at least one of the one or more images directly or indirectly references one or more musical artists, one or more musical albums, or one or more musical songs, adding to the audio playlist, by the large language model, one more audio tracks corresponding to the referenced one or more musical artists, one or more musical albums, or one or more musical songs.

4. The method of any combination of claims 1-3, wherein identifying, by the large language model, one or more features of the one or more images comprises identifying at least one of: a facial expression, an environment, a mood, an emotion, a location, a country, a city, a landscape, an object, an activity, or a time associated with the one or more images.

5. The method of any combination of claims 1-4, wherein generating, by the large language model, the audio playlist based on the one or more features comprises identifying a set of audio tracks associated with the one or more identified features.

6. The method of any combination of claims 1-5, wherein generating, by the large language model, the album cover art image based on the one or more features comprises using at least one of the one or more input images as the album cover art image.

7. The method of any combination of claims 1-6, wherein generating, by the large language model, the album cover art image based on the one or more features comprises generating, based on the one or more features, a new image as the album cover art image, wherein the new image may correspond to at least one of the one or more input images.

8. The method of any combination of claims 1-7, wherein generating, by the large language model, the album cover art image based on the one or more features comprises:
generating, by the large language model, text associated with the personalized audio album;
selecting, by the large language model, a font, a font size, a font color, and a placement location for the text; and
overlaying the album cover art image with the text at the selected placement location.

9. The method of any combination of claims 1-8, further comprising:
generating text describing the one or more input images and indicating one or more keywords associated with the one or more identified features; and
displaying the text to the user, wherein the generating, by the large language model, the audio playlist, the album title, and the album cover art image is based on the one or more keywords; and, for example:
displaying the one or more input images to the user, and overlaying the one or more keywords over associated portions of the one or more input images.

10. The method claim 9, further comprising receiving input from the user to edit at least one of the one or more keywords, wherein:
the generating, by the large language model, the audio playlist, the album title, and the album cover art image is based on the one or more keywords including the at least one edited keyword; or
the method further comprises regenerating, by the large language model, the audio playlist, the album title, and the album cover art image based on the one or more keywords including the at least one edited keyword.

11. The method of any combination of claims 1-10, further comprising, in response to generating, by the large language model, the audio playlist, automatically initiating playing of the audio playlist on a user device.

12. The method of any combination of claims 1-11, further comprising:
receiving from the user an edit input or a regenerate instruction directed to at least one of: the audio playlist, the album title, or the album cover art image; and
regenerating at least one of: the audio playlist, the album title, or the album cover art image based on the user input/instruction.

13. The method of any combination of claims 1-12, further comprising:
receiving a selection from the user of an audio streaming service; and
sending, via an application programming interface (API), the personalized audio album to the selected audio streaming service.

14. The method of any combination of claims 1-13, further comprising:
receiving a selection from the user to share the personalized audio album; and
providing a link to the personalized audio album to at least one of: the user, one or more phone numbers, one or more email addresses, or one or more social media platforms in response to the selection from the user; and, for example:
generating a video depicting creation of the personalized audio album, and sharing the video to the at least one of: the user, one or more phone numbers, one or more email addresses, or one or more social media platforms in response to the selection from the user.

15. A computer readable medium comprising computer executable code that, when executed by one or more programmable processors, causes one or more programmable processors to carry out the method of any of claims 1 to 14, or an apparatus programmed in accordance with such executable code.
